Europäisches Patentamt

European Patent Office

Office européen des brevets

(11) Veröffentlichungsnummer: **0 471 159 A1**

## EUROPÄISCHE PATENTANMELDUNG

(21) Anmeldenummer: **91109277.3**

(22) Anmeldetag: **06.06.91**

(51) Int. Cl.5: **F16H 7/04**

(30) Priorität: **06.06.90 DE 9006388 U**

(43) Veröffentlichungstag der Anmeldung:
**19.02.92 Patentblatt 92/08**

(84) Benannte Vertragsstaaten:
**AT BE CH DE DK ES FR GB GR IT LI LU NL SE**

(71) Anmelder: **MARANTEC ANTRIEBS- UND STEUERUNGSTECHNIK GMBH & CO., PRODUKTIONS OHG**
**Remser Brook 11**
**W-4834 Marienfeld(DE)**

(72) Erfinder: **Hörmann, Michael**
**c/o Remser Brook 11**
**W- 4834 Marienfeld(DE)**

(74) Vertreter: **Flügel, Otto, Dipl.-Ing.**
**Wissmannstrasse 14, Postfach 81 05 06**
**W-8000 München 81(DE)**

(54) **Antrieb mit einem um Trommeln geführten Seil, an dem ein Längsverschiebbarer Gegenstand angreift.**

(57) Antrieb mit einem um Trommeln geführten Endlos-Seil, an dem ein verschiebbar geführter Gegenstand, insbesondere Torblatt eines Garagentores oder dergleichen, angreift und der zur Erreichung einer geringen axialen Ausdehnung der Antriebstrommel und einen davon unabhängig und damit auch in technischer Hinsicht beliebig lang zu gestaltenden Verschiebeweges derart ausgebildet ist, daß im Bereich der Antriebstrommel eine weitere Trommel vorgesehen ist, also am antriebsseitigen Ende des Verschiebeweges, wobei beide Trommeln mit in radialen Ebenen in sich geschlossen umlaufenden Rillen versehen sind.

Fig. 1

Bei einem Seil, das mit mehr als 180° Umschlingungswinkel angetrieben ist, wird das Seil normalerweise mehrmals um eine mit einer entsprechend schraubenförmigen Rille versehene Antriebstrommel geschlungen. Aufgrund des schraubenförmigen Rillenverlaufes wandert das mehrmals um die Rolle gewundene Seil im An- und Ablaufbereich entsprechend um eine Ganghöhe bei einer Umdrehung der Rolle. Diese Verschiebung des Anlaufes und Ablaufes in axialer Richtung ist grundsätzlich hinderlich. Dieser axiale Versetzweg ist um so größer, je länger der mit dem Seil überspannte lineare Antriebsweg im Verhältnis zum Trommeldurchmesser ist. Von daher hat man auch Probleme hinsichtlich der Baugröße bei entsprechend großem Verhältnis zwischen Verschiebeweg und Trommeldurchmesser.

Daher ist hier gemeint ein Endlosseil, das also an dem der Antriebstrommel abgewandten Ende des linearen Verschiebungsweges, beispielsweise eines Torantriebes, mittels einer einfachen Umlenkrolle im rücklaufenden Trum wieder der Rolle zugeführt wird.

Es ist Aufgabe der Erfindung, auch bei geringer axialer Ausdehnung der Antriebstrommel einen davon unabhängig und damit auch in technischer Hinsicht beliebig langen Verschiebeweg zu erreichen.

Dies wird erfindungsgemäß dadurch erreicht, daß im Bereich der Antriebstrommel eine weitere Trommel vorgesehen ist, also am gleichen Ende, an dem sich auch der Antrieb befindet, wobei beide Trommeln nicht mit einer schraubenförmigen Führungsrille sondern mit einfachen umlaufenden Rillen ausgebildet sind.

Dabei könnte man daß Seil grundsätzlich derart mehrmals um die beiden Trommeln herum führen, beispielsweise 2 bis 3 mal oder auch öfter, je nach dem wie die Reibung zwischen Seil und Antriebstrommel beschaffen ist, um einen für die Mitnahme des Seils erforderlich großen Gesamtumschlingunswinkel zu erreichen, so also, daß die auflaufenden und ablaufenden Seiltrume auf den beiden Trommeln jeweils auf einer der beiden Seiten der Achsen der Trommeln verbleiben, bei gleich großen Trommeln (gleich großer Durchmesser); die zwischen den Trommeln verlaufenden Seiltrume also parallel zueinander gerichtet sind.

In bevorzugter Ausführung, insbesondere auch zur Erreichung eines noch größeren Umschlingungswinkels, wird das Seil zwischen den beiden Rollen in Form einer 8 geführt, kreuzt sich also jeweils zwischen den beiden benachbart angeordneten Rollen Da beide Rollen mit in sich geschlossen durchgehenden Rillen, also achsparallel angeordneten Nuten, versehen sind, ist von einer Rolle zur anderen jeweils ein Höhenversatz von einem halben Rillenabstand vorgesehen. Damit ist die Annäherung der beiden Rollen nicht auf Null bringbar. Man kann aber die Rollen dadurch näher aneinander bringen, daß die Tiefe der Führungsrillen für das Seil entsprechend tiefer als der Seildurchmesser gemacht wird. Nimmt man dann die Acht-Anordnung, kann man die Rollen praktisch Mantel auf Mantel laufen lassen, weil sie in Berührungsbereich gleichsinnig drehen.

Um die erforderliche Seilspannung aufrecht zu erhalten, wird das Seil gespannt, vorzugsweise dadurch, daß im Bereich der Umlenkrolle eine in Längstrumrichtung des Seils wirksame Federkraft vorgesehen wird.

Im Sinne eines großen Umschlingungswinkels ist die Antriebsrolle am äußersten Ende der Seilführungsstrecke angeordnet, was aber nicht unbedingt sein muß, weil auch die andere Trommel ein oder mehrfach umgriffen werden könnte, je nach dem wieviel Platz man dafür aufwendet und wie die Reibungsverhältnisse sind. In weiterhin bevorzugter Ausführung sind die Achsen der beiden Rollen parallel zueinander und senkrecht zur Längstrumrichtung des Seils aufeinanderfolgend angeordnet. Die letztere Anordnung ist im Sinne einer schmalen Bauart bzw. eines geringen Abstandes der beiden Längstrume des Seiles zueinander von Vorteil. Je mehr man die Senkrechte als Verbindungslinie zwischen den Achsen der beiden Trommeln aus dieser Richtung heraus gedreht anordnet, um so breiter wird der Abstand zwischen den beiden Längstrumen Das ist eine einfache Änderung für entsprechende Anpassungsaufgaben.

Die zweite Trommel, die der Antriebstrommel benachbart ist, besteht bevorzugt aus einzelnen Scheiben, deren jede eine umlaufende Rille für die Aufnahme des Seiles aufweist. Das hat den Vorteil, daß die Spannkräfte des Seiles, die von der Feder ausgehen, diese Scheiben insoweit gegeneinander verdrehen können, so daß die Spannkraft des Seiles voll auf den Umschlingungswinkel des Seiles an der Antriebstrommel zugute kommt und nicht durch Reibverluste im Bereich der anderen Trommel beeinträchtigt wird.

Als Feder kann man eine einfache Schraubenfeder derart anbringen, daß die Umlenkrolle über diese Schraubenfeder axial versetzbar an einer Führungsschiene angeordnet ist, die in bekannter Weise der Gleitführung eines Schlittens dient, der einerseits mit einem Seiltrum und andererseits mit dem anzutreibenden Gegenstand, beispielsweise einem ein oder mehrteiligen Torblatt, in Verbindung steht.

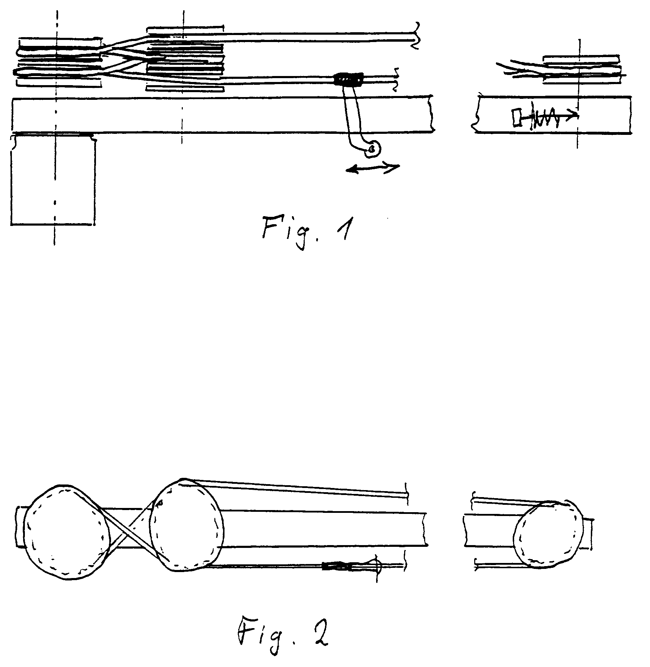

## Patentansprüche

1. Antrieb mit einem um Trommeln geführten Endlos-Seil, an dem ein verschiebbar geführter Gegenstand, insbesondere Torblatt eines Garagentores oder dergleichen, angreift,
**dadurch gekennzeichnet,**
daß im Bereich der Antriebstrommel eine weitere Trommel vorgesehen ist, also am antriebsseitigen Ende des Verschiebeweges, wobei beide Trommeln mit in radialen Ebenen in sich geschlossen umlaufenden Rillen versehen sind.

Fig. 1

Fig. 2

Europäisches
Patentamt

**EUROPÄISCHER RECHERCHENBERICHT**

| | **EINSCHLÄGIGE DOKUMENTE** | | EP 91109277.3 |
|---|---|---|---|
| **Kategorie** | **Kennzeichnung des Dokuments mit Angabe, soweit erforderlich, der maßgeblichen Teile** | **Betrifft Anspruch** | **KLASSIFIKATION DER ANMELDUNG (Int Cl.⁵)** |
| P,X | FR - A1 - 2 643 963<br>(NOIROT)<br>* Fig. 1 *<br>-- | 1 | F 16 H 7/04 |
| A | FR - A1 - 2 269 004<br>(DELORE)<br>* Fig. 1-3 *<br>-- | 1 | |
| A | GB - A - 2 088 987<br>(THE MARCONI COMPANY)<br>* Fig. 2-5 *<br>---- | 1 | |
| | | | **RECHERCHIERTE SACHGEBIETE (Int. Cl.⁵)**<br><br>F 16 H 7/00 |

Der vorliegende Recherchenbericht wurde für alle Patentansprüche erstellt.

| **Recherchenort** | **Abschlußdatum der Recherche** | **Prüfer** |
|---|---|---|
| WIEN | 14-11-1991 | KAMMERER |